# EUROPÄISCHE PATENTSCHRIFT

(11) **EP 2 381 218 B1**
(45) Veröffentlichungstag und Bekanntmachung des Hinweises auf die Patenterteilung: **12.10.2016**
(21) Anmeldenummer: 11162546.3
(22) Anmeldetag: 15.04.2011
(51) Int. Cl.: G01B 21/08, G01B 7/06

(54) **Messsonde zur zerstörungsfreien Messung der Dicke dünner Schichten**
Measuring probe for non-destructive measurement of the thickness of thin coatings
Sonde de mesure pour la mesure non destructive de l'épaisseur de couches minces

(30) Priorität: 23.04.2010 DE 202010006062 U
(43) Veröffentlichungstag der Anmeldung: 26.10.2011
(73) Patentinhaber: Helmut Fischer GmbH Institut für Elektronik und Messtechnik., 71069 Sindelfingen (DE)
(72) Erfinder: Fischer, Helmut, 6315 Oberägeri (CH)
(74) Vertreter: Maser, Jochen

(56) Entgegenhaltungen:
- EP-A1- 0 576 714
- DE-A1- 2 750 017
- DE-A1-102005 054 593
- JP-A- S60 138 402
- US-A- 5 831 430

## Beschreibung

Die Erfindung betrifft eine Messsonde zur zerstörungsfreien Messung der Dicke dünner Schichten auf Gegenständen.

Aus der DE 10 2005 054 593 A1 ist beispielsweise eine Messsonde zur zerstörungsfreien Messung der Dicke dünner Schichten bekannt, welche in einem Gehäuse zumindest ein Sensorelement aufweist. Diesem Sensorelement ist eine Aufsetzkalotte zugeordnet, so dass die Messsonde über diese Aufsetzkalotte auf der zu messenden Oberfläche einer Beschichtung aufgesetzt werden kann. Im Anschluss kann mit einer solchen Messsonde eine zerstörungsfreie Messung der Schichtdicke durchgeführt werden. Solche Messsonden werden im Allgemeinen zur Durchführung der Messung von Hand auf die Messoberfläche aufgesetzt. Ebenso kann die Verwendung eines Messstatives vorgesehen sein. Dabei sollte eine hinreichende Zugänglichkeit zur Messoberfläche gegeben sein, um eine solche Messsonde aufsetzen zu können.

Aufgrund der zunehmenden Qualitätsanforderungen einerseits und der zunehmenden Komplexität der Messungen, insbesondere für Mehrfachbeschichtungen, andererseits wird es erforderlich, solche Messsonden weiterzuentwickeln.

Aus der US 5,831,430 A ist eine Messvorrichtung bekannt, welche ein Gehäuse mit einer darin angeordneten Datenverarbeitung und Steuerungseinrichtung sowie einem Display umfasst. An dieses Gehäuse ist über eine Verbindungsleitung zumindest eine Messsonde anschließbar. Mittels einem Träger können zwei Messsonden benachbart zueinander und in einem Winkel zueinander aufgenommen werden, so dass durch eine Verkippbewegung des Trägers zunächst die eine Messsonde und dann die andere Messsonde zur Durchführung der Messung einsatzbereit ist.

Aus der JP 60-138 402 A ist eine Messvorrichtung bekannt, bei welcher eine erste und eine zweite Probe jeweils unabhängig voneinander in einem Gehäuse in axialer Richtung verfahrbar aufgenommen sind. Diese Messsonden werden entlang einer Oberfläche geführt und mit einem Wechselstrom beaufschlagt, wobei die eine Sonde eine Hochfrequenzsonde und die andere Sonde als Niederfrequenzsonde betrieben wird, um eine Änderung der im Frequenzbereich zur Ermittlung der Schichtdicke zu erfassen.

Aus der EP 0 576 714 A1 ist eine Messvorrichtung bekannt, bei welcher an einem Gehäuse mit einem Display, welches auch die Steuerungseinrichtung umfasst, eine erste und zweite Messsonde angeordnet ist. Diese Messsonden sind jeweils getrennt zueinander jedoch fest an dem Gehäuse angeordnet.

Der Erfindung liegt deshalb die Aufgabe zugrunde, eine Messsonde zu schaffen, durch welche Mehrfachbeschichtungen auf Gegenständen in einfacher und sicherer Weise mit jeweils für das anzuwendende Messverfahren optimierten Messköpfen geprüft werden können.

Diese Aufgabe wird erfindungsgemäß durch eine Messsonde gemäß den Merkmalen des Anspruchs 1 gelöst. Weitere bevorzugte Ausgestaltungen und Weiterbildungen sind in den weiteren Ansprüchen angegeben.

Die erfindungsgemäße Messsonde weist benachbart und getrennt vom ersten Messkopf zumindest einen weiteren Messkopf an einer Trägereinrichtung auf, der unabhängig vom ersten Messkopf ansteuerbar ist. Zwischen dem Gehäuse der Messsonde und der Trägereinrichtung ist eine Aufhängung vorgesehen, welche in zumindest einen Freiheitsgrad bewegbar die Trägereinrichtung zum Gehäuse aufnimmt. Dabei sind J die jeweiligen Polachsen der zumindest zwei an der Trägervorrichtung angeordneten Messköpfe räumlich getrennt zueinander angeordnet und parallel zueinander ausgerichtet.

Durch diese benachbarte und räumliche getrennte Anordnung von dem ersten und zumindest einen weiteren Messkopf an der Trägereinrichtung können die jeweiligen Messköpfe in optimierter Weise und unabhängig voneinander ausgebildet sein, um zusammen mit einer Steuerung jeweils ein optimiertes und isoliertes Messsystem zu bilden. Dadurch kann auch eine qualitativ verbesserte Messung ermöglicht sein. Diese Messsonde weist somit den Vorteil auf, dass nach dem einmaligen Aufsetzen auf eine zu prüfende Messoberfläche mittels dem ersten und zumindest einen weiteren Messkopf jeweils eine getrennte Messung der Dicke dünner Schichten ermöglicht wird. Durch die Zuordnung des ersten und zumindest einen weiteren Messkopfes an der Trägereinrichtung und dem Verbleib der Messköpfe an der Messoberfläche relativ zueinander in einer vorbestimmten Position zueinander und zum Gegenstand können Messungen mit gleichen oder unterschiedlichen Messverfahren durchgeführt werden, um entsprechend der Messaufgabe die ermittelten Daten in einer Auswerteeinrichtung auszuwerten. Dadurch kann in einfacher und sicherer Weise insbesondere eine Mehrfachbeschichtung geprüft werden, wobei für die jeweilige Beschichtung ein Messverfahren ausgewählt wird und ein optimierter Messkopf an der Trägervorrichtung eingesetzt ist. Durch diese Anordnung wird des Weiteren während dem Aufsetzen der Messsonde auf die Messoberfläche eine selbständige Ausrichtung der Trägereinrichtung auf der Messoberfläche ermöglicht, damit die zumindest zwei Messköpfe gleichermaßen aufliegen und bei einer gegebenenfalls gekippten Aufsetzposition der Messsonde ein selbständiges Ausrichten mit anschließendem Anliegen der Messköpfe erfolgt. Dadurch können sowohl ebene als auch gekrümmte Messoberflächen sicher geprüft und die Handhabung der Messsonde vereinfacht werden.

Eine weitere bevorzugte Ausgestaltung der Erfindung sieht vor, dass der zumindest eine erste Messkopf zumindest ein Sensorelement zur Messung der Schichtdicke nach einem magnetinduktiven Verfahren, nach einem Wirbelstromverfahren, nach einem phasensensitiven Verfahren oder nach einem magnetischen Gleichfeldverfahren ermittelt und der zumindest eine weitere Messkopf zumindest ein Sensorelement zur Messung der Schichtdicke nach einem der vorgenannten Messverfahren ermittelt. In Abhängigkeit der Messaufgabe, insbesondere des Grundwerkstoffes eines Messgegenstandes sowie den darauf aufgebrachten Beschichtungen, können die einzelnen Messverfahren ausgewählt und miteinander kombiniert werden und dementsprechend die Messköpfe an der Trägereinrichtung angeordnet sein.

Eine weitere bevorzugte Ausgestaltung der Erfindung sieht vor, dass an einer Trägereinrichtung zumindest zwei Messköpfe in einer Linie hintereinander angeordnet sind und vorzugsweise im Schwerpunkt der dadurch gebildeten Zwei- oder Mehrpunktauflage eine Aufhängung an der Trägereinrichtung angreift. Durch diese Anordnung wird insbesondere ein selbständiges Ausrichten der Messköpfe während dem Aufsetzen ermöglicht und sichergestellt, so dass nach dem Positionieren der Messsonde zum Messgegenstand ein Aufliegen der Messköpfe gegeben ist. Durch die vorzugsweise Anordnung einer Aufhängung im Schwerpunkt zwischen der durch die Messköpfe gebildeten Zweipunktauflage wird eine optimierte Ausrichtung ermöglicht.

Eine alternative Ausgestaltung der Messsonde sieht an der Trägervorrichtung zwei Messköpfe und einen Hilfspol vor, die eine Dreipunktauflage bilden und vorzugsweise im Schwerpunkt der Dreipunktauflage eine Aufhängung an der Trägereinrichtung angreift. Diese Anordnung ermöglicht sowohl bei ebenen als auch bei gekrümmten Flächen durch die Dreipunktauflage eine selbständige Ausrichtung. Bevorzugt sind zwei voneinander abweichende Messköpfe und ein Hilfspol vorgesehen, um eine Mehrfachbeschichtung zu prüfen. Alternativ können auch zwei gleiche Messköpfe mit einem Hilfspol vorgesehen sein. Zur selbständigen Ausrichtung und vollständigen Auflage der Messköpfe und des Hilfspols auf der Messoberfläche greift die Aufhängung bevorzugt an dem Schwerpunkt der Dreipunktauflage an der Trägereinrichtung an, wodurch eine maximale Taumelbewegung zur selbständigen Ausrichtung der Trägereinrichtung zur Messoberfläche über die Messköpfe oder den Hilfspol gegeben ist.

Nach einer weiteren bevorzugten Ausgestaltung der Erfindung ist an einem die Trägereinrichtung aufnehmenden Gehäuse zumindest eine Positioniervorrichtung vorgesehen. Diese Positioniervorrichtung kann sowohl bei einem Messsystem mit einer Zweipunktauflage als auch einem Messsystem mit einer Dreipunktauflage vorgesehen sein. Dies ermöglicht eine erleichterte Positionierung des Gehäuses zum Messgegenstand und eine erste Ausrichtung des Gehäuses zur Messoberfläche, um ein gezieltes Aufsetzen der Messköpfe an dem Messpunkt zu schaffen.

Eine weitere bevorzugte Ausgestaltung der Erfindung sieht vor, dass bei einem Messsystem zumindest zwei in einer Linie angeordnete Messköpfe zur Messung von Schichten entlang einer Mantellinie der gekrümmten Oberfläche ausgerichtet sind. Die Positionierungeinrichtung, welche vorzugsweise als Prisma ausgebildet ist, ist dabei rechtwinklig zu den beiden Messköpfen ausgerichtet. Dadurch kann eine Ausrichtung der Messköpfe und eine Messung entlang einer Mantellinie durchgeführt werden, so dass für beide Messköpfe dieselben Messbedingungen gelten. Dadurch kann ein durch die Krümmung entstehender Fehler bei der Messung der Dicke dünner Schichten bereits durch die Anordnung der Messköpfe zur Messoberfläche eliminiert werden.

Nach einer ersten Ausführungsform der Erfindung ist vorgesehen, dass die Aufhängung, welche die Trägereinrichtung zum Gehäuse verbindet, als Kugelgelenk ausgebildet ist. Ein solches Kugelgelenk ermöglicht eine dreidimensionale Veränderung der Lage der Trägereinrichtung zum Gehäuse. Dadurch kann eine sehr flexible Anpassung der Lage der Messköpfe zur Messoberfläche erfolgen.

Eine weitere alternative Ausführungsform der Erfindung sieht vor, dass die Aufhängung, welche die Trägereinrichtung zum Gehäuse verbindet, durch ein Federelement oder durch mehrere streifenförmige, insbesondere flach streifenförmige, Federelemente ausgebildet ist, welche an der Trägervorrichtung angreifen und gegenüberliegend mit einem Anschlusselement am Gehäuse anschließbar sind. Diese Anordnung weist den Vorteil auf, dass das oder die nebeneinander angeordneten streifenförmigen Federelemente beim Aufsetzen der Messsonde an der zu prüfenden Oberfläche eine zumindest geringen Anpresskraft auf den zumindest einen Messkopf zu dessen sicheren Anlage auf der Messoberfläche ermöglichen. Darüber hinaus ist gleichzeitig durch das Federelement oder die nebeneinander angeordneten streifenförmigen Federelemente eine zumindest geringfügige Verdrehung um die Längsachse des oder der einzelnen Federelemente ermöglicht. Somit weist diese Anordnung den Vorteil auf, dass eine reibungsfreie Lagerung der Messköpfe bezüglich einer Auslenkung und Schwenkbeweglichkeit zum Gehäuse gegeben ist. Bevorzugt sind die streifenförmigen Federelemente mit einem Anschlusselement gehalten und verbunden, welches in einfacher Weise im Gehäuse anschließbar ist. Dadurch kann eine einfache Montage und Demontage zum Gehäuse erfolgen. Ergänzend kann durch das Anschlusselement eine einfache Kontaktierung mit Anschlussleitungen beziehungsweise Signalleitungen am Gehäuse ermöglicht werden.

Eine alternative Ausgestaltung der Aufhängung sieht vor, dass ein Federelement blattfederartig ausgebildet ist und bevorzugt die Messköpfe mit ihren Polachsen senkrecht stehend zur Ebene des Federelementes ausgerichtet sind. Gemäß einer ersten Alternative können insbesondere mehrere elektrische Leiterbahnen auf dem Federelement vorgesehen sind. Dadurch kann eine einfache und konstruktive Ausgestaltung geschaffen werden, wobei gleichzeitig über das Federelement die Energieversorgung der Messköpfe ermöglicht wird. Dadurch sind keine zusätzlichen Signalleitungen erforderlich, die die Ausrichtung der Messköpfe zur Messoberfläche beeinträchtigen können. Dieses eine blattfederartige Federelement kann auch eine oder mehrere Aussparungen aufweisen, so dass eine Verdrehsicherung um die Längsachse einstellbar ist. Gemäß einer weiteren Alternative können auch separate Signalleitungen zu den Messköpfen führen.

Eine bevorzugte Ausgestaltung dieser alternativen Ausführungsform sieht vor, dass die Federelemente in einer gemeinsamen Ebene nebeneinander und mit Abstand zueinander angeordnet sind und bevorzugt die Messköpfe mit ihren Polachsen senkrecht stehend zur Ebene der Federelemente ausgerichtet sind. Dadurch kann die radiale Auslenkung der Trägereinrichtung zur Längsachse der durch den Abstand der Federelemente als auch durch die Querschnittsgeometrie der Federelemente bestimmt werden. Gleichzeitig kann eine Auslenkung in Aufsetzrichtung erfolgen und insbesondere die Federkraft in Aufsetzrichtung erhöht sein. Die zur Trägereinrichtung ausgerichteten Enden der Federelemente greifen bevorzugt am Schwerpunkt im Bereich des Schwerpunktes der Zweipunkt- oder Dreipunktauflage an. Dadurch kann eine lagerichtige Anordnung und Ausrichtung der Messköpfe auf der zu prüfenden Messoberfläche sichergestellt sein.

Eine weitere alternative Ausführungsform der Aufhängung sieht vor, dass diese als kardanische Vorrichtung ausgebildet ist. Dadurch kann in einfacher Weise eine gezielte Auslenkung beziehungsweise Auslenkrichtung der Trägereinrichtung beziehungsweise der daran angeordneten Messköpfe während dem Aufsetzen auf die Messoberfläche erzielt werden.

Eine bevorzugte Ausgestaltung der Aufhängung als kardanische Vorrichtung sieht vor, dass diese aus einem mit dem Gehäuse verbindbaren, insbesondere in Aufsetzrichtung der Messköpfe auslenkbaren Trägerstab und einem oder mehreren, insbesondere am freien Ende des Trägerstabes dazu angeordneten Federelementen, besteht, welche die Trägereinrichtung mit den zumindest zwei Messköpfen aufnehmen. Diese massereduzierte Anordnung ermöglicht ebenfalls ein sicheres Ausrichten und Aufsetzen der Messköpfe auf der Messoberfläche. Es wirkt also nur das Eigengewicht der Messköpfe und eine Andruckkraft des Trägerstabes auf die Messköpfe. Dadurch kann während dem Aufsetzen eine Beschichtung der Messoberfläche stark reduziert werden.

Eine bevorzugte Ausführungsform der kardanischen Vorrichtung sieht vor, dass das oder die Federelemente die Trägereinrichtung um eine Achse rechtwinklig zur Längserstreckung des Trägerstabes verschwenkbar zum sicheren Aufsetzen der zumindest zwei Messköpfe aufnehmen. Dadurch kann erzielt werden, dass bei einem Aufsetzen von zunächst nur einem Messkopf selbständig bei der Durchführung der weiteren Aufsetzbewegung der Messsonde der weitere Messkopf sich automatisch ausrichtet und ebenfalls mit Sicherheit auf der Messoberfläche aufliegt.

Des Weiteren sind bevorzugt die streifenförmigen Federelemente elektrisch leitend. Dies ermöglicht, dass die Federelemente eine Doppelfunktion übernehmen und keine zusätzlichen elektrischen Leitungen mehr anzubringen sind. Dadurch kann eine in der Masse erheblich reduzierte Sondeneinheit geschaffen und weitere störende Krafteinflüsse durch separate Signalleitungen, die sich nachteilig auf die Messung auswirken, beseitigt werden. Bevorzugt ist vorgesehen, dass entsprechend der erforderlichen Anzahl der elektrischen Anschlüsse streifenförmige Federelemente in einer Ebene ausgerichtet sind, so dass jedes Federelement quasi auch einer elektrischen Leitung für die Messköpfe entspricht. Alternativ können auch zwei, drei usw. Leitungen auf einem Federelement angeordnet sein, wobei diese beispielsweise durch Ätzung oder in Form einer flexiblen Leiterplatte hergestellt sein können.

Eine weitere bevorzugte Ausgestaltung der Aufhängung sieht vor, dass zumindest ein Federelement zwischen der Trägereinrichtung und dem Kopplungselement besteht, welches vorzugsweise rechtwinklig zur Trägereinrichtung ausgerichtet ist und zumindest zwei zueinander beabstandete und parallel ausgerichtete Federelemente das Kopplungselement zum Gehäuse oder einer Gehäuseplatte in Aufsetzrichtung auslenkbar tragen. Eine solche Anordnung weist den Vorteil auf, dass das zwischen dem Kopplungselement und der Trägereinrichtung angeordnete zumindest eine Federelement eine schwenkbare Auslenkung der Trägereinrichtung während einer Aufsetzbewegung ermöglicht, wohingegen die weiteren zwischen dem Kopplungselement und dem Gehäuse oder der Gehäuseplatte angeordneten parallel zueinander angeordneten Federelemente in und entgegen der Aufsetzrichtung der Messköpfe eine Auslenkung bewirken. Dabei ist bevorzugt eine Art Parallelogrammführung und Auslenkung zwischen dem Kopplungselement und dem Gehäuse oder der Gehäuseplatte gegeben. Somit ist die Trägereinrichtung wiederum zumindest um einen Freiheitsgrad bewegbar gelagert, so dass ein selbständiges Ausrichten und sicheres Aufsetzen der Messköpfe der Trägereinrichtung ermöglicht ist.

Eine weitere bevorzugte Ausgestaltung der vorgenannten Aufhängung sieht vor, dass das zumindest eine Federelement zwischen der Trägerplatte und dem Kopplungselement rechtwinklig oder parallel zur Trägereinrichtung ausgerichtet und daran befestigt ist. Beide Ausführungsformen ermöglichen eine Schwenkbewegung der Trägereinrichtung zumindest um einen Freiheitsgrad.

Eine weitere alternative Ausführungsform der Messsonde sieht vor, dass die Trägereinrichtung in das Gehäuse einsetzbar, insbesondere austauschbar, ist und vorzugsweise die Federelemente frei aus dem Gehäuse heraus angeordnet sind. Dadurch kann in besonderen Ausführungsformen ein die Trägereinrichtung zumindest teilweise umgebendes Gehäuse ausgebildet werden, welches getrennt zu einem weiteren Gehäuse angeordnet ist, welches insbesondere eine Positioniereinrichtung aufweist. Diese Anordnung ist insbesondere von Vorteil, wenn die zur Messung zur Verfügung stehenden Freiräume klein sind, so dass nur eine Messsonde mit einem geringen Bauvolumen zur Messoberfläche hingeführt werden kann.

Des Weiteren ist zwischen der Trägereinrichtung und dem Gehäuse bevorzugt ein Kraftspeicherelement angeordnet, welches die Messköpfe gegenüber dem Gehäuse eintauchbar lagert. Dadurch kann ein Schutz für den zumindest einen Messkopf bei zu stark aufgebrachter Kraft erzielt werden. Des Weiteren kann dadurch die gleichzeitige Auflage aller Messköpfe sichergestellt werden. Bevorzugt greift das Kraftspeicherelement im Schwerpunkt der Trägereinrichtung an.

Eine weitere bevorzugte Ausgestaltung der Messsonde sieht vor, dass die zumindest zwei Messpole sequentiell unter Beibehaltung ihrer Aufsetzposition ansteuerbar sind. Dadurch können die jeweils erfassten Messwerte unmittelbar miteinander verglichen oder in Bezug zueinander, insbesondere auch für eine Differenzbildung der ermittelten Schichtdicke oder Abstände der Messoberfläche zu den Schichten oder dem Grundwerkstoff, gesetzt werden, da die Messbedingungen gleich sind und die Messposition definiert ist.

Eine weitere bevorzugte Ausgestaltung der Erfindung sieht vor, dass an der Trägereinrichtung ein Anschlag ausgebildet ist, der beim Abheben des Gehäuses von der Messoberfläche an einer Schulter des Gehäuses anliegt. Diese Anordnung weist den Vorteil auf, dass gegebenenfalls wirkende magnetische Anziehungskräfte zwischen einem oder mehreren Messköpfen und dem Gegenstand überwunden werden, ohne dass eine Überbelastung der Aufhängung, insbesondere der Federelemente und/oder des zusätzlichen Kraftspeicherelementes, auftritt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer erfindungsgemäßen Messsonde,
- Figur 2: eine schematische Ansicht von vorne im Teilschnitt der Messsonde gemäß Figur 1,
- Figur 3: eine perspektivische Teilansicht von unten auf eine Trägereinrichtung der Messsonde gemäß Figur 1,
- Figur 4: eine schematische Seitenansicht einer alternativen Ausführungsform der Messsonde gemäß Figur 1,
- Figur 5: eine schematische Vorderansicht der Messsonde gemäß Figur 4,
- Figur 6: eine schematische Schnittdarstellung einer weiteren alternativen Ausführungsform zu Figur 1,
- Figur 7: eine perspektivische Ansicht auf eine Trägereinrichtung mit Messköpfen gemäß Figur 4,
- Figur 8: eine schematische Ansicht auf die Trägereinrichtung gemäß Figur 4,
- Figur 9: eine schematische Seitenansicht der Messköpfe gemäß Figur 5,
- Figuren 10a und b: eine schematische Seitenansicht und Draufsicht auf eine alternative Ausführungsform einer Messsonde zu Figur 1 und
- Figuren 11a und b: eine schematische Seitenansicht und perspektivische Ansicht von unten auf eine weitere alternative Messsonde zu Figur 6.

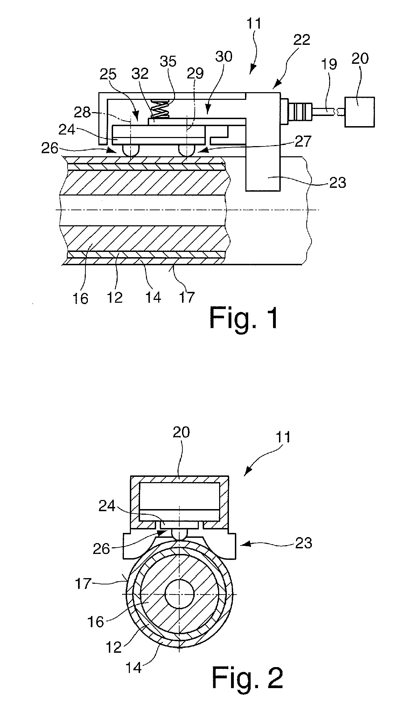

In Figur 1 ist eine schematische Seitenansicht einer erfindungsgemäßen Messsonde 11 dargestellt. Eine weitere schematische Ansicht der Messsonde 11 geht aus Figur 2 hervor. Eine solche Messsonde 11 wird zur zerstörungsfreien Messung der Dicke dünner Schichten 12, 14 an Gegenständen 16 eingesetzt. Diese Gegenstände 16 können eine ebene Messoberfläche oder wie im Ausführungsbeispiel dargestellt, eine gekrümmte Messoberfläche 17 aufweisen. Die Messsonde 11 wird über eine Anschlussleitung 19 mit einer schematisch dargestellten Auswerteeinrichtung 20 verbunden. Alternativ kann auch eine kabellose Datenübertragung der ermittelten und erfassten Messwerte an der Messsonde 11 an die Auswerteeinrichtung 20 vorgesehen sein.

Die Messsonde 11 umfasst ein Gehäuse 22, an welchem in Abhängigkeit der Messaufgabe eine Positioniereinrichtung 23 anbringbar oder einteilig an das Gehäuse 22 angeformt ist. Im vorliegenden Ausführungsbeispiel ist die Positioniereinrichtung 23 als Prisma ausgebildet, um eine gesicherte Positionierung auf dem Gegenstand 16 mit einer gekrümmten Messoberfläche 17 zu bilden. Alternativ können auch anderweitige Positioniereinrichtungen vorgesehen sein. Bei sehr empfindlichen Messoberflächen 17 kann die Positionierung eine zusätzliche Beschichtung, beispielsweise aus Kunststoff oder dergleichen, aufweisen.

In dem Gehäuse 22 ist eine Trägereinrichtung 24 zumindest in einem Freiheitsgrad bewegbar gelagert, welche einen ersten Messkopf 26 und zumindest einen weiteren Messkopf 27 räumlich getrennt zueinander an derselben Trägereinrichtung 24 aufnimmt. Jeder der Messköpfe weist eine Polachse 28, 29 auf, die parallel zueinander ausgerichtet und mit Abstand zueinander angeordnet sind. Der Abstand der Polachsen 28, 29 der Messköpfe 26, 27 beträgt beispielsweise wenige Millimeter, insbesondere 3 bis 10 mm, wobei im Vergleich zu großflächigen Messoberflächen 17 von einer punktförmigen Messung ausgegangen werden kann. Der erste und zumindest eine weitere Messkopf 26, 27 liegen auf einer gemeinsamen Linie, insbesondere rechtwinklig ausgerichtet zur Positioniereinrichtung 23, so dass die Messköpfe 26, 27 entlang einer Mantellinie der gekrümmten Messoberfläche 17 am Gegenstand 16 ausgerichtet sind.

Die Trägereinrichtung 24 ist mit einer Aufhängung 30 zum Gehäuse 22 auslenkbar gelagert. In einer ersten Ausführungsform greift zumindest an der Trägereinrichtung 24 ein streifenförmiges Federelement 31 an, welches als Blattfederelement mit darin angebrachten Aussparungen ausgebildet ist. Das Federelement 31 greift bevorzugt im Schwerpunkt 32 an der Trägereinrichtung 24 an, wobei der Schwerpunkt zwischen den beiden Messköpfen 26 und 27 liegt. Durch diese Lagerung der Trägereinrichtung 24 wird aufgrund des Federelementes 31 ermöglicht, dass zum einen eine elektrische Kontaktierung der Messköpfe 26, 27 erfolgt und andererseits sowohl eine Auslenkbewegung längs der Polachsen 28, 29 beziehungsweise eine Eintauchbewegung der Trägereinrichtung 23 in das Gehäuse 22 ermöglicht ist als auch eine Schwenkbewegung um eine Längsachse 33 des Federelementes beziehungsweise der Federelemente 31 ermöglicht wird. Ergänzend kann zwischen dem Gehäuse 22 und dem Schwerpunkt 32 ein Kraftspeicherelement 35 an der Trägereinrichtung 24 angreifen, um der Eintauchbewegung der Trägereinrichtung 24 beim Aufsetzen der Messsonde 11 auf den Gegenstand 16 gegenzuwirken und eine sichere Anlage der Messköpfe 26, 27 auf der Messoberfläche 17 zu gewährleisten. Die Trägereinrichtung 24 mit den daran angeordneten Messköpfen 26, 27 sowie die Aufhängung 30 und gegebenenfalls das Kraftspeicherelement 35 bilden eine Sondeneinheit 25, die austauschbar in das Gehäuse einsetzbar ist.

Die Trägereinrichtung 24 kann bevorzugt als Trägerplatte oder als Leiterplatte ausgebildet werden, so dass die elektrischen Anschlüsse zwischen den Messköpfen 26, 27 und der Leiterplatte in einfacher Weise ermöglicht werden. Gleichzeitig können auch entsprechende Kontaktstellen zum Anschluss des beziehungsweise der Federelemente 31 vorgesehen sein, die elektrisch leitend ausgebildet sind, wie dies nachfolgend noch beschrieben wird.

Die Trägervorrichtung 24 mit den beiden daran angeordneten Messköpfen 26, 27 bildet eine sogenannte Zweipunktauflage. Diese Anordnung sowie die daran angeordneten Federelemente 31 und gegebenenfalls des Kraftspeicherelements 35 können in das Gehäuse 22 einsetzbar beziehungsweise austauschbar darin angeordnet sein. Hierfür ist bevorzugt ein Anschlusselement 36 vorgesehen, um mit den weiteren, nicht näher dargestellten Signalleitungen kontaktiert zu werden.

Eine solche Messsonde 11 wird beispielsweise zur Ermittlung einer Mehrfachbeschichtung eingesetzt. Beispielsweise können Beschichtungen auf einer Druckwalze für Offset-Maschinen mit einer solchen Sonde 11 geprüft werden. Die Druckwalze bildet den Gegenstand 16, der beispielsweise aus einem Eisengrundwerkstoff besteht. Auf diesem Eisengrundwerkstoff ist eine erste Schicht 12, beispielsweise eine Kupferschicht, aufgebracht. Auf diese Kupferschicht ist eine weitere Schicht 14, beispielsweise eine Chromschicht, aufgebracht. Zur Durchführung dieser Messung und Prüfung der erforderlichen Dicke der Schichten 12, 14 ist vorgesehen, dass der erste Messkopf 26 beispielsweise ein Sensorelement zur Durchführung einer Schichtdickenmessung nach dem Wirbelstromverfahren aufweist und der zumindest eine weitere Messkopf 27 ein Sensorelement zur Durchführung der Schichtdickenmessung nach dem Gleichfeldverfahren ermöglicht. Dies bedeutet, dass der erste Messkopf die Schichtdicke 14 misst, indem über das hochfrequente Magnetwechselfeld Wirbelströme in der Kupferschicht, die sättigungsdick ist, induziert werden, deren sekundäres Magnetfeld das primäre hochfrequente Magnetfeld schwächt, so dass über die Schwächung der Abstand des auf der Messoberfläche 12 aufliegenden Messkopfes 26 zur Schicht 12 ermittelt wird. Über den weiteren Messkopf 27, der als Sensorelement eine Hallsonde umfasst, welche den Abstand zwischen der Messoberfläche 12 und dem Grundwerkstoff des Gegenstandes 16 erfasst, wird durch eine Differenzbildung der ermittelten Dicke der Schicht 14 und des Abstandes der Messober-fläche 17 zum Grundwerkstoff die Schichtdicke 12 ermittelt. Aufgrund der verbleibenden Positionierung der Messsonde 11 auf dem Messgegenstand 16 während der Durchführung der Messung und des definierten Abstandes der beiden Messköpfe 26, 27 zueinander kann durch eine solche Differenzmessung eine exakte Differenzmessung durchgeführt werden, um beispielsweise zwei Schichtdicken auf einem Gegenstand zu erfassen und zu prüfen. Alternativ kann vorgesehen sein, dass einer der beiden Messköpfe 26, 27 auch ein Sensorelement umfasst, um eine Schichtdicke nach einem magnetinduktiven Verfahren zu messen. In Abhängigkeit der Messaufgabe können diese unterschiedlichen Messköpfe 26, 27 in der Trägereinrichtung 24 angeordnet sein.

Eine solche Messung wird bevorzugt durch eine sequentielle Ansteuerung der Messköpfe 26, 27 durchgeführt. Dadurch kann auch eine Optimierung des jeweiligen Messverfahrens neben der optimierten Ausbildung der jeweiligen Messköpfe 26, 27 durch die getrennte Anordnung ermöglicht sein.

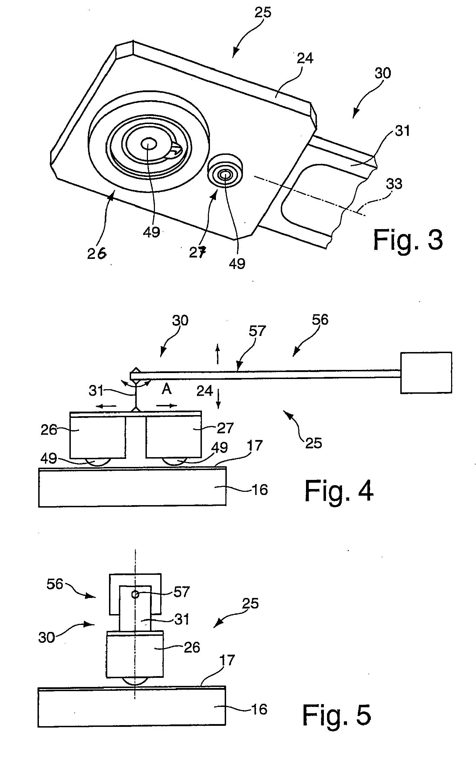

In den Figuren 4 und 5 ist eine weitere alternative Ausführungsform der Messsonde 11 dargestellt. Diese Messsonde 11 weicht in der Art der Ausgestaltung der Aufhängung 30 von der Ausführungsform gemäß den Figuren 1 bis 3 ab. Bei dieser Ausführungsform ist eine Aufhängung 30 für die Sondeneinheit 25 vorgesehen, welche als kardanische Vorrichtung 56 ausgebildet ist. Diese kardanische Vorrichtung 56 besteht aus einem Trägerstab 57, der bevorzugt als dünner, sich längs erstreckender Stab ausgebildet ist und in und entgegen einer Aufsetzrichtung der Messköpfe 26, 27 beziehungsweise entlang den Polachsen 28, 29 auslenkbar ist. Dabei kann der Trägerstab 57 bevorzugt als Rundstab ausgebildet sein. Ebenso kann auch ein eckiger Trägerstab 57 oder ein profilierter Trägerstab 57 ausgebildet sein, der in und entgegen der Aufsetzrichtung der Messköpfe 26, 27 auslenkbar, jedoch bevorzugt nur in geringem Maße tordierbar beziehungsweise gegenüber Torsion sehr steif ist. Bevorzugt ist am freien Ende des Trägerstabes 57 zumindest ein Federelement 31 angeordnet, welches insbesondere rechtwinklig zur Längsachse des Trägerstabes 57 ausgebildet ist. An dem gegenüberliegenden Ende des Federelementes 31 ist die Trägervorrichtung 24 befestigt. Das Federelement 31 ist gemäß einer ersten Ausführungsform, wie insbesondere aus Figur 5 hervorgeht, als ein blattfederförmiges Federelement 31 ausgebildet, auf welchem bevorzugt Leiterbahnen angeordnet sind. Bis zum Federelement 31 werden die Signalleitungen bevorzugt entlang des Trägerstabes 57 geführt. Alternativ kann dieses Federelement 31 auch als flexible Leiterplatte ausgebildet sein. Durch diese Ausführungsform wird des Weiteren ermöglicht, dass die Signalleitungen keine mechanische Verbindung zu den Messköpfen 26, 27 haben. Dies gilt auch für die weiteren analogen Ausführungsbeispiele. Dadurch wird eine Schwenkbeweglichkeit der Messköpfe 26, 27 gemäß Pfeil A zum Trägerstab 57 ermöglicht. Dies stellt sicher, dass selbst bei einem zunächst nicht lagerichtigen Aufsetzen der Messsonde 11 auf die Messoberfläche 17 ein selbständiges Ausrichten der Messköpfe 26, 27 erfolgt.

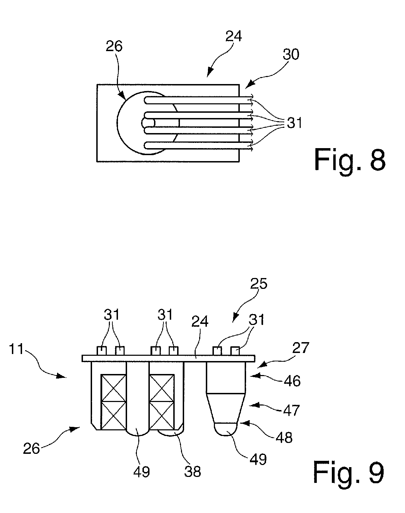

Des Weiteren kann alternativ zwischen dem Trägerstab 57 und der Trägereinrichtung 24 ein Federelement 31 in Analogie zu den Figuren 1 bis 3 oder eine Anordnung gemäß den nachfolgend noch beschriebenen Ausführungsbeispiel gemäß den Figuren 4 bis 8 vorgesehen sein, indem beispielsweise mehrere in einer Ebene nebeneinander angeordnete streifenförmige Federelemente 31 angeordnet sind. Diese kardanische Vorrichtung 56 wird insbesondere bei einer Messsonde 11 eingesetzt, welche zwei Messköpfe 26, 27 umfasst und eine Zweipunktauflage bilden, die beispielsweise über einen Messeinsatz wie bei der Ausführungsform gemäß den Figuren 1 bis 3 Einsatz findet. Sowohl diese Ausführungsform gemäß den Figuren 4 und 5 als auch die Ausführungsform gemäß den Figuren 1 bis 3 können auch bei ebenen oder leicht gekrümmten Flächen eingesetzt werden.

Ergänzend kann bei der Ausführungsform gemäß den Figuren 4 und 5 auch ein Kraftspeicherelement 35 vorgesehen sein. Bei der Ausführungsform gemäß den Figuren 4 und 5 ist lediglich die Sondeneinheit 25 ohne die weiteren Komponenten der Messsonde 11 dargestellt. Diese können in der Ausführungsform gemäß den Figuren 1 bis 3 entsprechen.

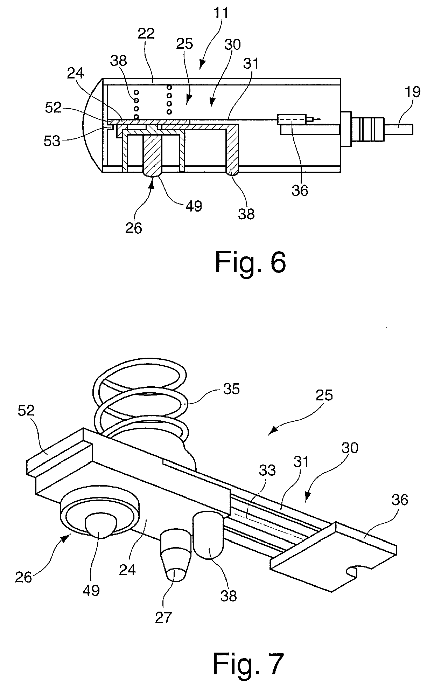

In den Figuren 6 bis 9 ist eine alternative Ausführungsform der Messsonde 11 gemäß den Figuren 1 bis 3 dargestellt. Diese Messsonde 11 weicht insbesondere dadurch ab, dass die Trägereinrichtung 24 einen ersten Messkopf 26 und einen weiteren Messkopf 27 sowie einen Hilfspol 38 aufweist, die derart zueinander angeordnet sind, dass diese eine Dreipunktauflage bilden. Darüber hinaus besteht die Aufhängung 30 abweichend aus mehreren streifenförmigen einzelnen Federelementen 31, welche in einer Ebene und mit Abstand zueinander angeordnet sind. Diese einzelnen streifenförmigen Federelemente 31 sind um eine gemeinsame Achse 33 verschwenkbar, da ein Ende der Federelemente 31 bevorzugt im Schwerpunkt 32 der Trägereinrichtung 24 und das gegenüberliegende Ende der Federelemente 31 an dem Anschlusselement 36 angeordnet sind. Solche Federelemente 31 sind bevorzugt elektrisch leitend und beispielsweise aus Kupfer-Beryllium oder dergleichen ausgebildet.

Diese Federelemente 31 wie auch das im ersten Ausführungsbeispiel weisen somit neben einer Führungsfunktion auch eine Federfunktion auf. Die Sondeneinheit 25 ist somit über die Aufhängung 30, insbesondere Federelemente 31, federnd nachgiebig entlang den Polachsen 28, 29 gelagert. Darüber hinaus ist eine Rotationsbewegung bezüglich der Längsachse 33 möglich. Dadurch kann beim Aufsetzen der Sondeneinheit 25 auf der Messoberfläche 17 ein definiertes und verkippungsfreies Aufsetzen zur zu prüfenden Oberfläche der Messköpfe 26, 27 ermöglicht werden. Gleichzeitig erfolgt ein selbständiges Ausrichten zur Auflage der Messköpfe 26, 27 und des Hilfspols 38.

Diese streifenförmigen Federelemente 31 gemäß der Ausführungsform in den Figuren 6 bis 9 arbeiten analog zu einem Federelement 31 gemäß den Figuren 1 bis 3 reibungsfrei und ermöglichen ein Taumeln der Trägereinrichtung 24 zum Gehäuse 22 beziehungsweise der Positioniereinrichtung 23, so dass beim Aufsetzen der Sondeneinheit 25 durch die Dreipunktauflage eine definierte Lage der Messköpfe 26, 27 eingenommen wird. Dies ermöglicht dieselben Vorteile bei der Durchführung der Messung der Schichtdicken wie bei der vorbeschriebenen Zweipunktauflage der Sondeneinrichtung 25 gemäß der Ausführungsform in den Figuren 1 bis 3. Im Ausführungsbeispiel gemäß den Figuren 6 bis 9 umfasst die Sondeneinheit 25 einen ersten Messkopf 26, der ein Sensorelement, beispielsweise eine Spule auf einem Topfkern, aufweist, welches zur magnetinduktiven Schichtdickenmessung vorgesehen ist. Des Weiteren umfasst der weitere Messkopf 27 beispielsweise ein Sensorelement zur Messung der Dicke der Schichten 12, 14 nach dem Gleichfeldverfahren, welches einen Permanentmagneten 46 umfasst, der an einem Feldkonzentrator 47 nahe zu einem Hallsensor 48 vorgesehen ist. Dieser Hallsensor 48 liegt unmittelbar hinter einer Aufsetzkalotte 49.

Zum sicheren Abheben der Sondeneinheit 25 gemeinsam mit dem Gehäuse 22 der Messsonde 11 ist an der Trägerplatte 24 ein Anschlag 52 vorgesehen, der an einer Schulter 53 bei einer Abhebebewegung des Gehäuses 22 anliegt. Dadurch wird eine gegebenenfalls wirkende Magnetkraft zwischen dem oder den Messköpfen und dem Gegenstand 16 überwunden und eine Überbelastung der Aufhängung 30 vermieden.

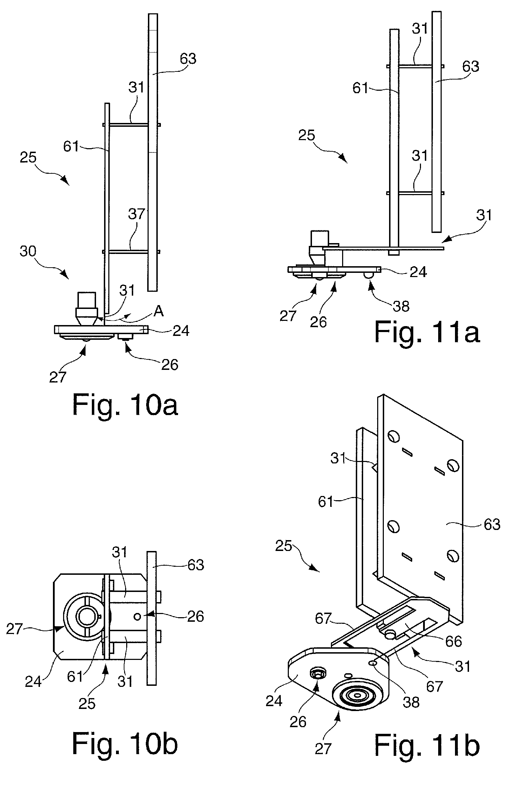

In den Figuren 10a und b ist eine weitere alternative Ausführungsform für eine Aufhängung 30 der Sondeneinheit 25 dargestellt, welche insbesondere bei einer Messsonde 11 mit einer Zweipunktauflage eingesetzt wird. Diese Zweipunktauflage wird durch zwei Messköpfe 26, 27 gebildet, die an der Trägereinrichtung 24 angeordnet sind. Die Trägereinrichtung 24 wird über zumindest ein, vorzugsweise zwei, parallel ausgerichtete und im Abstand zueinander angeordnete Federelemente 31 mit einem Kopplungselement 61 verbunden, wobei bevorzugt die Federelemente 31 und das Kopplungselement 61 parallel zur Polachse 28, 29 der Messköpfe 26, 27 ausgerichtet sind. Rechtwinklig hierzu sind zumindest zwei im Abstand zueinander angeordnete blattfederförmige Federelemente 31 vorgesehen, die mit einer Gehäuseplatte 63, welche einen Teil des Gehäuses 22 darstellt, verbunden sind, so dass während einer Aufsetzbewegung das Kopplungselement 61 relativ zur Gehäuseplatte 63 parallel verschoben beziehungsweise auf und ab bewegt wird und die blattfederartigen Federelemente 31 für eine parallelogrammartige Verschiebebewegung des Kopplungselementes 61 zur Gehäuseplatte 63 sorgen. Die zwischen dem Kopplungselement 61 und der Trägereinrichtung 24 angeordneten Federelemente 31 ermöglichen wiederum eine Schwenkbeweglichkeit der Trägereinrichtung 24 gemäß Pfeil A. Diese Anordnung und Ausrichtung ist insbesondere bei der Verwendung von zwei Messköpfen 26, 27 ohne Hilfspol 33 an einer Trägereinrichtung 24 von Vorteil.

Wie aus der Draufsicht aus Figur 10b hervorgeht, erfolgt die Parallelogrammführung des Kopplungselementes 61 zur Gehäuseplatte 63 durch insgesamt vier blattfederförmige Federelemente 31. Dadurch ist auch eine exakte Führung der Trägereinrichtung 24 gegen Verkippen und somit der daran angeordneten Messköpfe 26, 27 ermöglicht.

In den Figuren 11a und b ist eine alternative Ausführungsform der Aufhängung 30 zu den Figuren 10a und b dargestellt. Diese alternative Aufhängung 30 der Sondeneinheit 25 ist insbesondere bei einer Messsonde 11 mit einer Dreipunktauflage vorgesehen, bei der die Trägereinrichtung 24 zwei Messköpfe 26, 27 und einen Hilfspol 38 umfasst. Die Anordnung und Aufnahme des Kopplungselementes 61 zur Gehäuseplatte 63 ist gleich zur Ausführungsform gemäß den Figuren 10a und b. Abweichend hiervon ist jedoch die Verbindung der Trägereinrichtung 24 zum Kopplungselement 61. Anstelle eines senkrecht zur Trägereinrichtung 24 ausgerichteten Federelementes 31 oder mehreren Federelementen 31 gemäß den Figuren 10a und b ist bei dieser Ausführungsform das oder die Federelemente 31 parallel zur Trägereinrichtung 24 ausgerichtet beziehungsweise rechtwinklig zum Kopplungselement 61. Das Federelement 31 entspricht prinzipiell dem Federelement 31 gemäß Figur 3, wobei bei dieser Ausführungsform noch eine zusätzliche Zunge 66 vorgesehen ist, um die Abschnitte 67 des Federelementes 31 zu verlängern, so dass nicht nur eine Auslenkung in Aufsetzrichtung, sondern gleichzeitig auch eine Verdrehung um die Längsachse und somit eine taumelnde Bewegung der Trägereinrichtung 24 zum lagerichtigen Aufsetzen der Messköpfe 26, 27 und des Hilfspols 38 gegeben ist. Die Zunge 66 erstreckt sich in die Aussparung, welche in dem blattfederförmigen Federelement 31 eingebracht ist. Diese in den Figuren 11a und b dargestellte Aufhängung 30 ist auch für eine Trägereinrichtung 24 mit einer Zweipunktauflage einsetzbar.

Die Energieversorgung kann bei den Ausführungsformen gemäß den Figuren 10a und b sowie den Figuren 11a und b ebenfalls über die Federelemente 31 erfolgen, wobei diese dann entsprechend mit Leiterbahnen oder geätzten Leiterbahnen versehen sind.

Bei den vorstehend beschriebenen Sondeneinheiten 25 können prinzipiell alle Messköpfe zum taktilen Messen der Dicke dünner Schichten eingesetzt werden, die entsprechend der Ein- oder Mehrschicht/Grundwerkstoffkombination ausgewählt werden.

## Patentansprüche

1. Messsonde zur zerstörungsfreien Messung der Dicke dünner Schichten auf einem Gegenstand (16), mit einem Messkopf (26), der zumindest ein Sensorelement zum Aufsetzen auf eine Messoberfläche (17) eines Gegenstandes (16) aufweist, und mit einer Trägereinrichtung (24) zur Aufnahme des Messkopfes (26), welche von einem Gehäuse (22) zumindest teilweise umgeben ist, **dadurch gekennzeichnet, dass** zwischen dem Gehäuse (22) und der Trägereinrichtung (24) eine Aufhängung (30) vorgesehen ist, welche in zumindest einem Freiheitsgrad bewegbar die Trägereinrichtung (24) zum Gehäuse (22) aufnimmt, dass benachbart und getrennt zum ersten Messkopf (26) zumindest ein weiterer Messkopf (27) an der Trägereinrichtung (24) angeordnet ist, der unabhängig vom ersten Messkopf (26) ansteuerbar ist und dass die Messköpfe (26, 27) jeweils Polachsen (28, 29) aufweisen, die räumlich getrennt zueinander angeordnet und parallel zueinander ausgerichtet sind.

2. Messsonde nach Anspruch 1, **dadurch gekennzeichnet, dass** der zumindest eine erste Messkopf (26) zumindest ein Sensorelement zur Messung der Schichtdicke nach einem magnetinduktiven Verfahren, nach einem Wirbelstromverfahren, nach einem phasensensitiven Verfahren oder nach einem magnetischen Gleichfeldverfahren ermittelt und der zumindest eine weitere Messkopf (27) zumindest ein Sensorelement zur Messung der Schichtdicke nach einem magnetinduktiven Verfahren, nach einem Wirbelstromverfahren, nach einem phasensensitiven Verfahren oder nach einem magnetischen Gleichfeldverfahren ermittelt.

3. Messsonde nach einem der vorhergehenden Ansprüche, **dadurch gekennzeichnet, dass** an der Trägereinrichtung (24) zumindest zwei Messköpfe (26, 27) in einer Linie hintereinander angeordnet sind und vorzugsweise im Schwerpunkt (32) der durch die Messköpfe (26, 27) gebildeten Zweipunktauflage eine Aufhängung (30) an der Trägereinrichtung (24) angreift oder dass an der Trägereinrichtung (24) zwei Messköpfe (26, 27) und ein Hilfspol (38) vorgesehen sind, die eine Dreipunktauflage bilden und vorzugsweise im Schwerpunkt der Dreipunktauflage eine Aufhängung (30) an der Trägereinrichtung (24) angreift.

4. Messsonde nach Anspruch 3, **dadurch gekennzeichnet, dass** an einem die Trägereinrichtung (24) aufnehmenden Gehäuse (22) zumindest eine Positioniereinrichtung (23) zum Aufsetzen und Ausrichten des Gehäuses (22) zum Gegenstand (16) vorgesehen ist und vorzugsweise die zumindest zwei in einer Linie angeordneten Messköpfe (26, 27) bei der Messung von gekrümmten Messoberflächen (17) entlang einer Mantellinie der gekrümmten Messoberfläche (17) des Gegenstandes (16) ausgerichtet sind.

5. Messsonde nach einem der vorhergehenden Ansprüche, **dadurch gekennzeichnet, dass** die Aufhängung (30), welche die Trägereinrichtung (24) mit dem Gehäuse (22) verbindet, als Kugelgelenk ausgebildet ist.

6. Messsonde nach einem der Ansprüche 1 bis 4, **dadurch gekennzeichnet, dass** die Aufhängung (30), welche die Trägereinrichtung (24) mit dem Gehäuse (22) verbindet, durch ein Federelement (31) oder mehrere nebeneinander angeordnete streifenförmige Federelemente (31) ausgebildet ist, die an der Trägereinrichtung (24) angreifen und vorzugsweise gegenüberliegend mit einem Anschlusselement (36) am Gehäuse (22) anschließbar sind.

7. Messsonde nach Anspruch 6, **dadurch gekennzeichnet, dass** ein Federelement (31) blattfederartig ausgebildet ist sowie bevorzugt die Messköpfe (26, 27) mit ihren Polachsen (28, 29) senkrecht stehend zur Ebene des Federelementes (31) ausgerichtet und insbesondere mehrere elektrische Leiterbahnen auf dem Federelement (31) vorgesehen sind oder dass die Federelemente (31) in einer gemeinsamen Ebene nebeneinander und mit Abstand zueinander angeordnet sind sowie bevorzugt die Messköpfe (26, 27) mit ihren Polachsen (28, 29) senkrecht stehend zur gemeinsamen Ebene der Federelemente (31) ausgerichtet sind und vorzugsweise im Bereich des Schwerpunktes (32) zueinander an der Trägereinrichtung (24) angreifen.

8. Messsonde nach einem der Ansprüche 1 bis 4, **dadurch gekennzeichnet, dass** die Aufhängung (30), welche die Trägereinrichtung (24) mit dem Gehäuse (22) verbindet, durch eine kardanische Vorrichtung (56) ausgebildet ist und insbesondere die kardanische Vorrichtung (56) aus einem mit dem Gehäuse (22) verbindbaren, insbesondere in Aufsetzrichtung der Messköpfe (26, 27) auslenkbaren Trägerstab (57) und einem oder mehreren, insbesondere am freien Ende des Trägerstabes (57) rechtwinklig angeordneten Federelementen (31) besteht, welche die Trägereinrichtung (24) aufnehmen.

9. Messsonde nach Anspruch 8, **dadurch gekennzeichnet, dass** das oder die Federelemente (31) die Trägereinrichtung (24) um eine Achse rechtwinklig zur Längserstreckung des Trägerstabes (57) verschwenkbar zum sicheren Aufsetzen der zumindest zwei Messköpfe (26, 27) aufnehmen.

10. Messsonde nach Anspruch 9, **dadurch gekennzeichnet, dass** die Federelemente (31) elektrisch leitend ausgebildet und insbesondere aus Kupfer-Beryllium hergestellt sind.

11. Messsonde nach einem der Ansprüche 1 bis 4, **dadurch gekennzeichnet, dass** die Aufhängung (30), welche die Trägereinrichtung (24) mit dem Gehäuse (22) verbindet, durch zumindest ein Federelement (31) zwischen der Trägereinrichtung (24) und einem Kopplungselement (61) besteht und dass das Kopplungselement (61) vorzugsweise rechtwinklig zur Trägereinrichtung (24) ausgerichtet ist und dass zumindest zwei zueinander beabstandete und parallel ausgerichtete Federelemente (31) die Kopplungseinrichtung (61) zum Gehäuse (22) oder einer Gehäuseplatte (63) in Aufsetzrichtung auslenkbar tragen und vorzugsweise das zumindest eine Federelement (31) zwischen der Trägereinrichtung (24) und dem Kopplungselement (61) rechtwinklig oder parallel zur Trägereinrichtung (24) ausgerichtet und daran befestigt ist.

12. Messsonde nach Anspruch 6, **dadurch gekennzeichnet, dass** die Trägereinrichtung (24) in dem Gehäuse (22), vorzugsweise austauschbar, einsetzbar ist und insbesondere die Federelemente (31) frei an dem Gehäuse (22) herausführbar angeordnet sind und vorzugsweise an der Trägereinrichtung (24) ein Anschlag (52) ausgebildet ist, der beim Anheben des Gehäuses (22) von der Messoberfläche (17) an einer Schulter (53) am Gehäuse (22) anliegt.

13. Messsonde nach einem der vorhergehenden Ansprüche, **dadurch gekennzeichnet, dass** die zumindest zwei Messköpfe (26, 27) sequentiell unter Beibehaltung ihrer Aufsetzposition zur Messoberfläche (17) auf dem Gegenstand (16) ansteuerbar sind.

## Claims

1. Measuring probe for non-destructive measuring of the thickness of thin layers on an object (16) with a measuring head (26), which comprises at least one sensor element for contact on a measurement surface (17) of an object (16), and with a support device (24) for receiving the measuring head (26), which is at least partly surrounded by a housing (22), **characterised in that** between the housing (22) and the support device (24), a mounting suspension (30) is provided, so that the support plate (23) slots into the housing (22) in such a way that it is moveable with at least one degree of freedom, that at least one further measuring head (27), which is adjacent to and separated from the first measuring head (26), is arranged on the support device (24), which can be controlled independently of the first measuring head (26) and that the measuring heads (26, 27) comprise polar axes (28, 29) in each case, which are arranged spatially separated from each other, and are preferably oriented parallel to each other.

2. Measuring probe according to claim 1, **characterised in that** at least the first measuring head (26) determines at least one sensor element for measuring the layer thickness according to a magnetic induction process, eddy current method, phase-sensitive process or magnetic DC field process, and the at least one further measuring head (27) determines at least one sensor element for measuring the layer thickness according to a magnetic induction process, eddy current method, phase-sensitive process or magnetic DC field process.

3. Measuring probe according to any one of the preceding claims, **characterised in that** at least two measuring heads (26, 27) are arranged one behind the other in a line on the support device (24), and a mounting suspension (30) preferably engages on the support device (24) at the centre of gravity (32) of the two-point support formed by the measuring heads (26, 27) or that two measuring heads (26, 27) and an auxiliary pole (38) are provided on the support device (24), which form a three-point support, and a mounting suspension (30) preferably engages on the support device (24) at the centre of gravity of the three point support.

4. Measuring probe according to claim 5, **characterised in that** at least one positioning device (23) for contact and orientation of the housing (22) relative to the object (16) is provided on one housing (22) which receives the support device (24) and in particular the at least two measuring heads (26, 27) arranged in a line are oriented along a surface line of the curved measuring surface (17) of the object (16) during measurement of curved measurement surfaces (17).

5. Measuring probe according to any one of the preceding claims, **characterised in that** the mounting suspension (30), which connects the support device (24) to the housing (22), is formed as a ball joint.

6. Measuring probe according to any one of claims 1 to 4, **characterised in that** the mounting suspension (30), which connects the support device (24) to the housing (22), is formed by a spring element (31) or by several strip-like spring elements (31), arranged next to one another, which engage on the support device (24), and are attached to the housing (22) on the opposite side by a connecting element (36).

7. Measuring probe according to claim 6, **characterised in that** a spring element (31) is formed like a leaf-spring, as well as that the measuring heads (26, 27) are preferably oriented with their polar axes (28, 29) standing perpendicularly to the level of the spring element (31), and that several electrical conducting paths are provided on the spring element (31) in particular or that the spring elements (31) are arranged in a common level next to one another, and are arranged at a distance from one another, as well as that the measuring heads (26, 27) are preferably oriented with their polar axes (28, 29) standing perpendicularly to the level of the spring elements (31), and preferably engage together on the support device (24) in the region of the centre of gravity (32).

8. Measuring probe according to any one of claims 1 to 4, **characterised in that** the mounting suspension (30), which connects the support device (24) to the housing (22), is formed by a cardanic device (56) and particular the cardanic device (56) consists of a support bar (57), which is connected to the housing (22), and which is deflectable particularly in the direction of contact of the measuring heads (26, 27), and one or several spring elements (31), which are particularly arranged on the free end of the support bar (57), which receive the support device (24).

9. Measuring probe according to claim 8, **characterised in that** the spring element or spring elements (31) receive the support device (24) pivotally about an axis at right angles to the longitudinal extension of the support bar (57) for secure contact of the at least two measuring heads (26, 27).

10. Measuring probe according to claim 9, **characterised in that** the spring elements (31) are designed to be electrically conductive, and are made of copper-beryllium in particular.

11. Measuring probe according to any one of claims 1 to 4, **characterised in that** the mounting suspension (30), which connects the support device (24) to the housing (22), is formed by at least one spring element (31) between the support device (24) and a coupling element (61), and that the coupling element (61) is oriented preferably at right angles to the support plate (24), and that at least two spring elements (31), which are arranged at a distance from each other, and oriented in parallel, carry the coupling element (61) in such a way that it is deflected relative to the housing (22) or a housing plate (63) and in particular the at least one spring element (31) between the support device (24) and the coupling element (61) is oriented at right angles to or parallel to the support device (24), and is attached thereto.

12. Measuring probe according to claim 6, **characterised in that** the support device (24) is inserted in the housing (22), preferably removably, and that particularly the spring elements (31) are arranged on the housing (22) in such a way that they are freely guided out and in particular a stop (52) is formed on the support device (24), which lies against a shoulder (53) on the housing (22) whilst the housing (22) is lifted from the measurement surface (17).

13. Measuring probe according to any one of the preceding claims, **characterised in that** the at least two measuring heads (26, 27) are controlled sequentially whilst maintaining their contact position relative to the measurement surface (17) on the object (16).

## Revendications

1. Sonde de mesure destinée à la mesure non-destructive de l'épaisseur de couches minces sur un objet (16), laquelle est pourvue d'une tête de mesure (26) qui présente au moins un élément capteur destiné à être positionné sur une surface de mesure (17) d'un objet (16), et d'un dispositif porteur (24) destiné à recevoir la tête de mesure (26) et entouré au moins partiellement d'un boîtier (22), **caractérisée en ce qu'**entre le boîtier (22) et le dispositif porteur (24) est prévue une suspension (30) qui reçoit le dispositif porteur (24) en lui permettant de bouger selon au moins un degré de liberté par rapport au boîtier (22), **en ce que** sur le dispositif porteur (24) est disposée, et ce de manière contiguë à la première tête de mesure (26) et séparée de celle-ci, une autre tête de mesure (27) qui est activable de manière indépendante de la première tête de mesure (26), et **en ce que** les têtes de mesure (26, 27) présentent respectivement des axes polaires (28, 29) qui sont disposés l'un vers l'autre de manière séparée dans l'espace et qui sont orientés parallèlement l'un à l'autre.

2. Sonde de mesure selon la revendication 1, **caractérisée en ce que** ladite au moins une première tête de mesure (26) détermine au moins un élément capteur destiné à mesurer l'épaisseur de couche selon un procédé magnéto-inductif, selon un procédé par courants de Foucault, selon un procédé de sensibilité à la phase ou selon un procédé par champ magnétique continu, et **en ce que** ladite au moins une autre tête de mesure (27) détermine au moins un élément capteur en vue de mesurer l'épaisseur de couche selon un procédé magnéto-inductif, selon un procédé par courants de Foucault, selon un procédé de sensibilité à la phase ou selon un procédé par champ magnétique continu.

3. Sonde de mesure selon l'une quelconque des revendications précédentes, **caractérisée en ce qu'**au moins deux têtes de mesure (26, 27) sont disposées sur le dispositif porteur (24), et ce l'une derrière l'autre sur une même ligne, et qu'une suspension (30) appuie sur le dispositif porteur (24) de préférence au niveau du centre de gravité (32) de l'appui sur deux points formé par lesdites têtes de mesure (26, 27) ou **en ce que** sur le dispositif porteur (24) sont prévus deux têtes de mesure (26, 27) et un pôle auxiliaire (38) lesquels forment un appui sur trois points et qu'une suspension (30) appuie sur le dispositif porteur (24) de préférence au niveau du centre de gravité dudit appui sur trois points.

4. Sonde de mesure selon la revendication 3, **caractérisée en ce que** sur un boîtier (22) dans lequel est logé le dispositif porteur (24) est prévu au moins un dispositif de positionnement (23) destiné à positionner et à orienter le boîtier (22) par rapport à l'objet (16) et **en ce que** de préférence lesdites au moins deux têtes de mesure (26, 27) disposées sur une même ligne sont orientées, lors de la mesure de surfaces de mesure incurvées (17), le long d'une génératrice de la surface de mesure incurvée (17) de l'objet (16).

5. Sonde de mesure selon l'une quelconque des revendications précédentes, **caractérisée en ce que** la suspension (30) qui relie le dispositif porteur (24) au boîtier (22) est réalisée sous forme de joint sphérique.

6. Sonde de mesure selon l'une quelconque des revendications 1 à 4, **caractérisée en ce que** la suspension (30) qui relie le dispositif porteur (24) au boîtier (22) est formée par un élément élastique (31) ou par plusieurs éléments élastiques (31) en forme de bande disposés les uns à côté des autres, lesquels appuient sur le dispositif porteur (24) et peuvent être raccordés au boîtier (22), de préférence face à face, à l'aide d'un élément de raccordement (36).

7. Sonde de mesure selon la revendication 6, **caractérisée en ce qu'**un élément élastique (31) est réalisé en tant que ressort en forme de lame et que de préférence les têtes de mesure (26, 27) sont orientées de manière à ce que leurs axes polaires se situent perpendiculairement au plan de l'élément élastique (31) et qu'en particulier plusieurs pistes électroconductrices sont prévues sur l'élément élastique (31), ou **en ce que** les éléments élastiques (31) sont disposés côte à côte et à une distance donnée les uns des autres dans un plan commun et que de préférence les têtes de mesure (26, 27) sont orientées de manière à ce que leurs axes polaires (28, 29) se situent perpendiculairement au plan commun des éléments élastiques (31) et appuient de préférence dans la zone du centre de gravité (32) du dispositif porteur (24).

8. Sonde de mesure selon l'une quelconque des revendications 1 à 4, **caractérisée en ce que** la suspension (30) qui relie le dispositif porteur (24) au boîtier (22) est formée par un dispositif à cardan (56) et **en ce qu'**en particulier le dispositif à cardan (56) se compose d'une tige support (57) pouvant être reliée au boîtier (22) et en particulier pouvant être déviée dans le sens de positionnement des têtes de mesure (26, 27) ainsi que d'un élément ou de plusieurs éléments élastiques (31) qui sont disposés en particulier à angle droit à l'extrémité libre de la tige support (57) et qui reçoivent le dispositif porteur (24).

9. Sonde de mesure selon la revendication 8, **caractérisée en ce que** l'élément ou les éléments élastiques (31) reçoivent le dispositif porteur (24) de manière à pouvoir le faire pivoter autour d'un axe à angle droit par rapport à l'extension longitudinale de la tige support (57) en vue d'assurer le positionnement fiable desdites aux moins deux têtes de mesure (26, 27).

10. Sonde de mesure selon la revendication 9, **caractérisée en ce que** les éléments élastiques (31) sont électroconducteurs et sont en particulier fabriqués en cuprobéryllium.

11. Sonde de mesure selon l'une quelconque des revendications 1 à 4, **caractérisée en ce que** la suspension (30) qui relie le dispositif porteur (24) au boîtier (22) se compose d'au moins un élément élastique (31) situé entre ledit dispositif porteur (24) et un élément de couplage (61) et **en ce que** l'élément de couplage (61) est orienté de préférence à angle droit par rapport au dispositif porteur (24) et **en ce qu'**au moins deux éléments élastique (31) disposés à une distance donnée l'un de l'autre et orientés parallèlement l'un à l'autre portent le dispositif de couplage (61) par rapport au boîtier (22) ou à une plaque de boîtier (63) de manière à pouvoir le faire dévier dans le sens de positionnement, et **en ce que** de préférence ledit au moins un élément élastique (31) est orienté entre le dispositif porteur (24) et l'élément de couplage (61) de manière à former un angle droit par rapport au dispositif porteur (24) ou de manière parallèle à celui-ci et est fixé à ce dernier.

12. Sonde de mesure selon la revendication 6, **caractérisée en ce que** le dispositif porteur (24) peut être mis en place dans le boîtier (22) de préférence de manière à pouvoir être échangé, et **en ce qu'**en particulier les éléments élastiques (31) sont disposés sur le boîtier (22) de manière à pouvoir en sortir librement et **en ce que** sur le dispositif porteur (24) est formée de préférence une butée (52) qui repose, lorsque le boîtier (22) est soulevé et quitte le contact avec la surface de mesure (17), sur un épaulement (53) prévu sur le boîtier (22).

13. Sonde de mesure selon l'une quelconque des revendications précédentes, **caractérisée en ce que** lesdites au moins deux têtes de mesure (26, 27) sont activables de manière séquentielle tout en conservant leur position par rapport à la surface de mesure (17) sur l'objet (16).
